# EUROPEAN PATENT SPECIFICATION

(11) **EP 2 335 059 B1**
(45) Date of publication and mention of the grant of the patent: **08.03.2017**
(21) Application number: 08875199.5
(22) Date of filing: 17.10.2008
(51) Int. Cl.: G01N 27/00, G01N 29/02, G01N 29/036, G01N 29/30, G01N 29/24, G01N 9/00, H01H 33/56

(54) **Gas-insulated electric or electronic facility with piezoelectric resonators for the measurement of the density of an isolating gas**
Gasisolierte elektrische oder elektronische Schaltvorrichtung mit piezoelektrischen Resonatoren zur Messung der Dichte eines Isoliergases
Installation électrique ou électronique à isolement gazeux avec des résonateur piézoélectriques pour la mesure de la densité d'une gaz d'isolement

(43) Date of publication of application: 22.06.2011
(73) Proprietor: ABB Research Ltd, 8050 Zürich (CH)
(72) Inventor: BRÄNDLE, Hubert, CH-8102 Oberengstringen (CH); ANDERSSON, Lars, CH-5415 Kirchdorf (CH)
(74) Representative: ABB Patent Attorneys
(86) International application number: PCT/EP2008/064019
(87) International publication number: WO 2010/043268

(56) References cited:
- EP-A- 0 484 569
- EP-A- 0 582 045
- US-A1- 2007 139 165
- US-A1- 2008 047 329

## Description

### TECHNICAL FIELD

The present invention relates to the field of devices for the measurement of the gas density, in particular the gas density of an isolating gas of a gas-isolated electrical and/or electronic facility. It furthermore relates to specific uses of such devices.

### BACKGROUND OF THE INVENTION

Due to the possibility of flashover in case of switching in a switching unit a clearance is necessary between active and non-active part of the switchgear. In case of large power switching units such as substations in power distribution systems, the clearances need to be large for safety reasons.

The use of SF₆ gas as an insulating medium in switchgear reduces the clearance distance between active and non-active parts of a switchgear facilitating the following advantages of gas-insulated applications compared to air insulated applications:
Less space requirements - especially in congested city areas;
Less sensitivity to pollution, as well as salt, sand or even large amounts of snow;
Less operation & maintenance costs.

The presence of this isolating gas however needs to be monitored, as a significant drop of the gas density may lead to insufficient insulation. Therefore, high-power gas-insulated switching stations must be equipped with sensors for monitoring a sufficient presence of gas in the inter-space between the switch and a corresponding housing of the switchgear. In case of so-called gas-insulated substations including usually several bays, each of them comprising several panels of several switchgear units, each switchgear unit has to be equipped with a corresponding sensor.

Sensors which can be used in this context are as such known in the field, and one particularly reliable and high-accuracy sensing principle relies on a differential measurement of the resonance frequency of a pair of piezoelectric resonators, wherein one of the resonators (measurement resonator) is exposed to the gas surroundings and one of the resonators (reference resonator) is located in an evacuated space. In the presence of the gas surroundings, the measurement resonator changes the resonance frequency of the piezoelectric resonator, a measurement signal can be obtained which is directly proportional to the density of the gas. If a carefully chosen pair of resonators is used and if in addition to that the further exterior parameters around the two resonators (mainly temperature) are maintained at the same level, a very high degree of measurement accuracy is achieved. This measurement principle as well as the corresponding devices are for example described in EP 0 484 569 and in EP 0 582 045.

US 2007/0139165 discloses acoustic wave devices and related systems. Within a vast list of possibilities, measurements of gas concentrations and density are mentioned, as well. Data transmission between such sensors and a monitoring device may be effected wirelessly via antenna. The device can be powered by an interrogating radio frequency signal transmitted by a transceiver. Alternatively, it can be self-powered by capturing non-electromagnetic energy from the surroundings and without the need for an interrogating radio frequency signal. For such self-powering, specific energy capturing elements are disclosed that transform heat, vibration, mechanical stress etc. into useful electrical energy.

US 2008/0047329 discloses various sensors, such as ultrasonic, RFID, optical, chemical sensors, or sensors for monitoring e.g. motion, temperature, integrity, altitude, pressure, weight, leakage, etc., for remote monitoring of cargo spaces, vehicles or fluid reservoirs. The RFID tags can be powered actively or passively. In addition, sensors for measurands such as temperature, optical, flow, humidity, chemical, biochemical, current, voltage, magnetic field, electric field, force, acceleration, velocity, displacement, position, density, eletrical resistance, impedance, capacitance, inductance, opacity, turbidity and pressure, may be interrogated by the interrogator directly or via RFID tags. Furthermore, interrogators, multiplexers, transceivers or transmitters and other electricity consuming devices on the cargo container needed for operation of or for gathering information about a tagged object can be self-powered using energy harvesting devices, such as solar panels, vibration power generators, or magnetic field variation devices. Again, such devices harvest primary energy in optical, vibrational or earth magnetic field form and transform it into useful electrical energy to drive interrogators or sensors. In contrast, the electrical antennas, including plasma antennas and nanotube antennas, capable of receiving electrical energy are designed for interrogation purposes only, i.e. for electromagnetic wireless communication of the RFID chip or SAW sensor to the interrogator or control system.

### SUMMARY OF THE INVENTION

An objective of the present invention is therefore to provide a gas-insulated electric or electronic facility equipped with an improved device for the measurement of the gas density. A further objective of the present invention is to provide uses of such devices in a gas-insulated electric or electronic facility. These objectives are achieved by the subject-matter of the independent claims. This objective is achieved by the subject-matter of the independent claims.

Specifically, the present invention relates to an improvement of a device for the measurement of the density of an isolating gas in a gas-isolated electrical and/or electronic facility, wherein the device comprises at least one piezoelectric resonator located in a chamber in direct or indirect connection with the insulating gas space and comprising essentially the same density of said gas, wherein the device comprises at least one piezoelectric reference resonator located in a reference chamber which is isolated as concerns said gas from said space and said chamber, and wherein the device comprises actuating elements and at least one control element for the determination of the difference in resonance frequency between the two resonators.

Therefore, the invention relates to an improvement of a device as disclosed in EP 0 582 045.

According to one aspect of the invention, such a device furthermore comprises at least one wireless link unit connected to the control element for wireless communication with a monitoring device as well as at least one pick-up unit for powering of the sensor.

As outlined in the introductory portion, typically gas-insulated substations include a large number of separate spaces or compartments which are filled with isolating gas. The presence of individual spaces or compartments is necessary for safety reasons and for reducing common mode error problems. On the other hand, a large number of gas-tight compartments necessitates the presence of at least one sensor for the gas density for each of the spaces or gas-filled cavities. Typically, each of these devices is connected to a central monitoring device, and subsets of such gas density measuring devices may be grouped to have one central monitoring device per bay. Typically therefore these devices have to be connected via a cable to the central monitoring device, and it is this cable which provides on the one hand power supply to the sensor and on the other hand enables data transfer to and from the sensor.

Present practice is thus to connect all density sensors in a GIS (gas-insulated substation) bay via cables to one central monitoring device per bay. The sensors are powered and exchange data with the monitoring device via this cable. There are up to approximately 20 cables needed per bay for this function nowadays.

The proposed invention simplifies this whole set up in that not only the data transfer to and from the sensors to a central monitoring device is made wireless, in addition to that also the sensor units are made completely standalone in that also the power supply is provided in a wireless manner. Correspondingly no cabling for the installation of the gas monitoring function is required leading to savings in material and installation. Furthermore there is no need for central power supply for the sensors. The fact that no more cables, which can suffer mechanical damage, are involved, leads to a much higher robustness and reliability of the sensor network. There is a much higher independence of the sensors leading to a reduction of the probability of common source errors. The completely standalone and wireless design of the sensors allows to have a much higher backup safety of this highly critical insulation status measurement in that it very easily allows to have more than one sensor for each individual cavity but also to have for example two monitoring devices for a group of commonly controlled sensors, however each of these monitoring devices being in individual contact with each of the sensors providing a high redundancy and high reliability.

Typically the resonance frequencies of the resonators are in the range of 32.6 kHz, and each of the resonators is provided with electrodes which are driven by driving resonance circuits. Normally the actual measurement resonator is located in a tubular space in the sensor, which tubular space is open to the space where the gas to be monitor is located.

There may be provided a filter element between this measurement resonator and the isolation space where the isolation gas is located. Normally, the reference resonator is located in a reference chamber (for example a blind bore) closely located next to the tubular space where the measurement sensor is located, and this space of the reference resonator is evacuated. Evaluation of the actual sensor data normally takes place in that the output of one of the resonators is treated as the clock and the output of the other resonator is used as a D-flip-flop input such that the correlation of the two signals leads to a final signal which is proportional to the difference of the resonance frequency of the two resonators and proportional to the gas density in the tubular space.

Typically, the pick-up unit provides the necessary energy for operation of essentially all the operational elements of the sensor, namely the actuating elements (typically resonant circuits for driving the resonators, normally power supply indirectly by control element), the control element (taking the function of controlling and driving the resonant circuits, collecting the actual measurement date therefrom, optionally first data-processing as well as exchange of control and measurements data information to and from the monitoring device(s)), and optionally of the wireless link unit (if the wireless link unit needs independent power supply at all).

According to the present invention, the pick-up unit comprises a pick-up electrode or pick-up coil. In case of the pick-up coil or winding this may be connected to form a resonant circuit to a capacity. The centre frequency and Q-value of this resonance circuit can be adapted to the actual source of the wireless powering. Preferably, there can be provided a specific source for wireless powering of the sensors. For example, this can be a specifically provided unit which emits electromagnetic radiation in a specific band. In case of use of such a specific powering unit, a narrow frequency band and a correspondingly high Q-value of the resonant circuit in the sensors can be chosen which leads to a highly efficient and selective energy transfer between this powering unit and the sensors.

According to the present invention, the sensitivity and/or resonance frequency of the pick-up electrode or pick-up coil is adapted to electrical and/or magnetic fields generated by the grid voltage and/or the currents in the primary switchgear of the facility. In other words, it has surprisingly been found that in the context of the specific application of these sensors in the vicinity of switching units and gridlines the already present alternating electric and/or magnetic fields can directly be used, so to speak in a symbiotic way, to power the sensors with sufficient electrical power in a highly efficient manner. In this case, preferably the sensitivity and/or resonance frequency of the pick-up electrode or pick-up coil is adapted to electrical and/or magnetic fields with a frequency in the range of 15 Hz - 100 Hz, and preferably at the operating frequency of the substation. Alternatively it is possible to adapt the frequency to a range of 15 kHz - 15 MHz. It is also possible to provide several pick-up units, for example two pick-up units, with each one being adapted for either of these frequency ranges, i.e. for example the first pick-up unit being adapted for the low frequency range 15 Hz - 100 Hz and the second pick-up unit for the high frequency range 15 Hz - 15 MHz.

According to a preferred embodiment, the wireless link unit transmits data with a frequency in the range of 2 - 3 GHz, preferably in the range of 2,3 - 2.6 GHz. The information can be transmitted by frequency modulation or amplitude modulation or another kind of modulation and/or chopping. The whole wireless data transmission can be provided by a standard wireless LAN-installation.

According to yet another preferred embodiment of the invention, with the aim of reducing the power necessary for operating the sensor, only differential gas density sensor data are transmitted via the wireless link unit to the monitoring device(s). It is for example possible to operate the sensors such that data transmission only takes place if a deviation from normal in the gas density exceeding a threshold value, i.e. a relevant or significant or even faulty difference of gas density from normal operating conditions, is detected or evaluated by the control element. Data transmission is thereby optimised to take place only in moments when necessitated because of the change of gas density. This essentially means that if there is no data transfer no change takes place. For reasons of safety, such a data transfer protocol can be supplemented by regular low-level "alive status" signals by the sensors, which, if not collected by the monitoring device, would indicate a problem with data transmission.

According to another preferred embodiment, the sensor comprises a power storage element for power backup. This can for example be selected from the group of battery and capacity, and can preferably be a gold capacitor.

In order to further simplify the sensor, it is possible, if physical constraints allow so, that the pick-up unit and the wireless link unit use the same antenna.

In order to further reduce power consumption of the sensor in particular in connection with data transfer, the wireless link unit may comprise a directional antenna. This directional antenna, which for example can be in the form of a bendable wire, is such that, upon installation of the device, it can be directed to the monitoring device, i.e. its emission characteristics are adapted for radiofrequency exchange in the preferred direction where the monitoring device is located.

Furthermore, the present invention relates to a gas-insulated electrical (including and/or electronic components) switchgear or transformer. It furthermore relates to a gas-insulated panel with a group of electric and/or electronic switchgears and/or transformers as well as to a whole gas-insulated substation with a number of such groups and/or bays. In this case, the switchgear and/or transformer, group of switchgears and/or transformers and the substation, respectively, are equipped with at least one device as defined above. In case of a substation each panel or group can be equipped with at least one device.

Furthermore the present invention relates to the use (or a method of operation) of a device as defined above for the measurement of the gas density in a SF₆-filled gas-insulation space or compartment of a gas-insulated unit or facility, wherein the device is located at a position where electrical and/or magnetic fields generated by grid voltage and/or currents in the primary switchgear of the unit or facility, respectively, are strong enough to couple a sufficient amount of energy into the sensor via the pick-up unit. Within one bay of a gas-insulated substation, a multitude of devices can be located in various places, and one single monitoring device or a pair of redundant monitoring devices collects the data provided by these devices and controls these devices.

The device, optionally after initial or intermittent complete data transfer, may preferably only transfer information about changes of the density of the gas, wherein this transfer can be continuous, intermittent, or preferably only at such moments in time when measurement data or data changes exceeding a predefined threshold value are detected in a device.

Further embodiments of the present invention are outlined in the dependent claims.

In summary, the present invention preferably includes the following aspects, either alone or in combination:
- A density sensor powered by the electrical and/or magnetical fields generated by the grid voltage and/or by the currents in the primary switchgear, and data exchange via wireless communication with the central monitoring device.
- The sensor can be equipped with a gold capacitor for power backup.
- The data transmission can be optimised for low power consumption, preferably by restricting data transmission to relevant (i.e. above-threshold) changes of gas density.
- Sensor as a whole can be designed to minimize power consumption.

Benefits for customers are, inter alia, as follows:
- No cabling for the SF₆-monitoring function is required, savings in material and installation time and labour.Reduced time for installation through simpler commissioning.
- No central power supply for the sensors needed.
- Avoidance of cables that can suffer mechanical damage leads to reduced risk of failure and reduced maintenance.
- Higher operationale reliability of the whole gas density sensor system.

An implementation may further use an automatically configured wireless network (Mote) or ZigBee. There is the possibility of adding redundant central monitoring devices as outlined above and data collection from more than one bay per central monitoring device.

### SHORT DESCRIPTION OF THE FIGURES

In the accompanying drawings preferred embodiments of the invention are shown in which:
- Figure 1: is a schematic view of two sensors according to the invention located adjacent to a gas isolated space or compartment, wherein on the left side the central monitoring station is located above and on the right side the central monitoring station is located below the sensor; and
- Figure 2: a schematic view of a group of sensors controlled and evaluated by one common monitoring station.

### DETAILED DESCRIPTION OF THE PREFERRED EMBODIMENTS

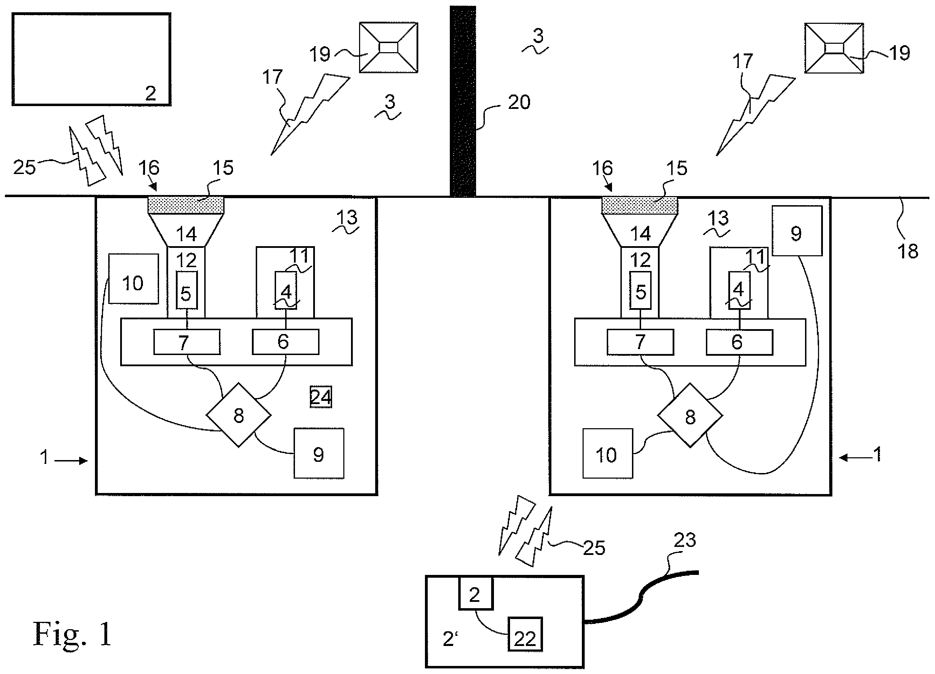

Referring to the drawings, which are for the purpose of illustrating the present preferred embodiments of the invention and not for the purpose of limiting the same, figure 1 shows in a schematic view two sensors 1 which are located adjacent to a gas filled cavity 3, specifically which are arranged integrated or attached to a wall 18 thereof. In the cavity 3 there is located an insulation gas, such as SF₆ (Sulfurhexafluoride), and aim of this gas filled cavity or space is to electrically insulate conductors or switchgear equipment from surrounding parts.

Each of these sensors 1 comprises a pair of resonators. On the one hand there is a so called reference resonator 4 and on the other hand a measurement resonator 5. Each of these resonators 4, 5 is given by a piezoelectric crystal which is provided on faces with electrodes which are driven by specifically provided resonant circuits 6, 7. The reference resonator 4 is located in a solid body 13 of the sensor 1 in a blind bore 11. The empty space in this blind bore 11 is evacuated such that there are clearly defined surrounding conditions for this reference resonator. In particular, this space in the blind bore 11 is completely shielded from the gas atmosphere in the gas filled cavity.

Next to this blind bore 10, preferably as closely as possible, there is located a tubular hole 12 in which the measurement resonator 5 is located. This tubular hole 12 is widening towards the gas filled cavity in a widening portion 14, and there is provided a filter element 15 which essentially shields the interior of the spaces 12 and 14 from the gas filled cavity and makes sure that only gas may penetrate trough the gas permeable opening 16 such that the gas density in space 3 and in space 12, 14 is essentially identical. This allows to ensure that the conditions measured by the measurement resonator 5 are representative of the conditions in the gas filled cavity 3.

As mentioned-above, the cavity of the measurement resonator 5 should be as close as possible to the location of the reference resonator 4 to ensure that both resonators, apart from the difference in their gas exposure, are subject to as identical surrounding conditions as possible. To this end, normally the solid body 13 is provided as a highly heat conducting solid block (for example made from copper or the like), and the cavities 11 and 12 are located as closely adjacent to each other as possible. Both resonators 4, 5 are driven by individual resonant circuits 6, 7, respectively. These resonators 4, 5 are driven and controlled by a sensor control unit 8.

According to the invention the sensor 1 comprises at least one wireless link unit 10. This wireless link unit 10 is connected to the sensor control unit and allows wireless data transfer to and from a central monitoring device 2, as indicated by arrows 25.

This wireless link unit 10 can be provided as a standard wireless local area network station using standard data transmission frequencies in the GHz range and using standard data transmission protocols. The data transfer between the sensor 1 or sensors 1 and the central monitoring device 2 can include the transmission of control signals from the central monitoring device 2 to the sensor 1 as well as control signals from the sensor 1 to the central monitoring device 2, and in particular it involves the transfer of the actual sensor measurement data between the sensor 1 and the central monitoring device 2.

This data transfer, in view of as low power consumption as possible, is performed preferably such that only if a noticeable or significant difference in the gas density from normal (such as a gauging value, or a critical gas density value) is deteced by the sensor, data transmission takes place. Correspondingly therefore, the control unit 8 evaluates in a first evaluation step the development of the gas density as a function of time and only in case of exceeding a predefined threshold difference value (in positive and negative direction) the sensor control unit 8 triggers data transfer to the central monitoring device 2 via the wireless link unit 10. In view of the fact that there may be long silent phases, if the gas pressure is constant, and in view of the fact that there maybe problems associated with the data transfer, it is advisable to regularly have an exchange of at least status information (so called alive signals) between the central monitoring devices 2 and the sensor device 1 or each sensor device 1.

Furthermore each of the sensors is provided with a pick-up electrode or coil schematically illustrated by box 9. This pick-up device 9 is used for powering all the elements in the sensor 1 which need energy to be operational. If the total energy management in the sensor 1 is controlled by the sensor control unit 8, as shown in figure 1, this pick-up unit 9 is connected to the sensor control unit 8 only. The pick-up electrode or coil 9 is adapted to pick-up energy which is anyway available due to the presence of electrical and/or magnetical fields due to the switchgear or due to surrounding grid lines or the like. So there is no need for a specific device for powering the sensors 1 as the sensors 1 act like symbiotic power consumers. Correspondingly, the pick-up coils 9, which are typically structured as resonant circuits including a pick-up coil and a capacitor, are adapted in frequency and frequency band (Q-value) to the specific condition of the anyway present electrical and/or magnetical fields generated by the grid voltage and/or by the currents in the primary switchgear.

According to the invention, the sensor 1 is completely standalone and there is no need for any cabling to and from the sensor 1 at all. Furthermore, there is no need for a specific wireless powering device as in this very specific situation the power is available due to the primary electrical and/magnetical fields generated by the grid voltage and the currents in the primary switchgear.

The relative arrangement of the pick-up unit 9 and the wireless link unit 10 can be adapted to the particular needs. As indicated in figure 1 on the left side, for a situation when the central monitoring device 2 is located somewhere in or close to the gas filled cavity, it is possible to locate the wireless link unit 10 in the sensor close to the wall 18 of a cavity 3.

In the case where the central monitoring device 2 is rather located in the rearward region as indicated on the right side, the wireless link unit 10 can be located in a region of the sensor 1 opposite to the wall side 18. It is even possible to provide a directional kind of antenna for the wireless link unit 10 in order to further reduce power consumption of the wireless data transfer and to reduce the interference effects with other fields and data transmission.

As indicated on the right hand side of figure 1, it is furthermore possible to locate the pick-up electrode or coil 9 as closely as possible to a location where the primary electric and/or magnetic fields generated by the grid voltage and/or the currents, respectively, are present or are largeste in the primary switchgear in order to achieve an efficient coupling of these fields into the pick-up element 9.

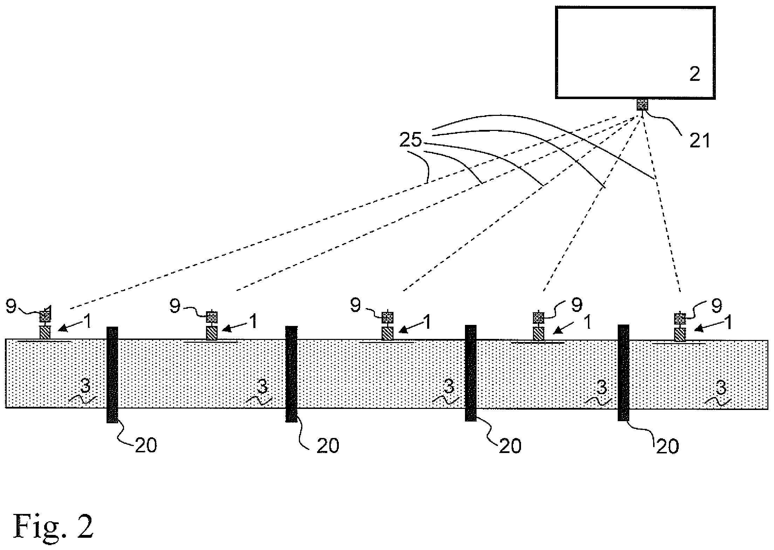

As indicated in figure 2, one single central monitoring device 2 may be used for data transfer 25 to a number of sensors 1, each sensor 1 being responsible for measurement of an individual gas filled cavity or compartment. In view of absence of any cabling needs, it is however also possible to have two redundant central monitoring devices 2 for the same group of sensors 1, and to have them collect data concomitantly and in a redundant manner to increase safety of the sensor system 1.

### LIST OF REFERENCE NUMERALS

- 1: sensor
- 2, 2': central monitoring device
- 3: gas filled cavity
- 4: reference resonator
- 5: measurement resonator
- 6: resonant circuit for 4
- 7: resonant circuit for 5
- 8: sensor control unit
- 9: pick-up electrode or coil
- 10: wireless link unit
- 11: blind bore in 13 for 4
- 12: tubular hole in 13 for 5
- 13: solid body of 1
- 14: widening portion of 12
- 15: filter element
- 16: gas permeable opening in 18
- 17: electric and/or magnetic fields generated by (primary) surrounding devices
- 18: wall of cavity 3
- 19: source of electric and/or magnetic fields
- 20: separation between individual cavities
- 21: wireless link unit in 2
- 22: data processing unit in 2
- 23: connection (power source, data transfer)
- 24: battery
- 25: data transfer between sensor and central monitoring device

## Claims

1. Gas-insulated electric or electronic facility comprising a primary switchgear and a device (1) for the measurement of the density of an isolating gas in a space (3) of the facility, wherein the device (1) comprises at least one piezoelectric resonator (5) located in a chamber (12) in direct or indirect connection with said space (3) and comprising essentially the same density of said gas, wherein the device (1) comprises at least one piezoelectric reference resonator (4) located in a reference chamber (11) which is isolated as concerns said gas from said space (3) and said chamber (12), and wherein the device comprises actuating elements (6, 7) and at least one control element (8) for the determination of the difference in resonance frequency between the two resonators (4, 5), **characterized in that**
the device (1) furthermore comprises at least one wireless link unit (10) connected to the control element (8) for wireless communication with a monitoring device (2) as well as at least one pick-up unit (9) for powering of the device (1),
the pick-up unit (9) provides the necessary energy for operating the actuating elements (6, 7), the control element (8) and the wireless link unit (10),
the pick-up unit (9) comprises a pick-up electrode or pick-up coil, and
a sensitivity and/or resonance frequency of the pick-up electrode or pick-up coil is adapted to electrical and/or magnetical fields generated by a grid voltage and/or by currents, respectively, in the primary switchgear of the facility in order to power the device (1) directly by said electrical and/or magnetical fields.

2. Gas-insulated electric or electronic facility according to claim 1, wherein the pick-up electrode or pick-up coil is connected in a resonant circuit to a capacity.

3. Gas-insulated electric or electronic facility according to any of the preceding claims, wherein the sensitivity and/or resonance frequency of the pick-up electrode or pick-up coil is adapted to electrical and/or magnetical fields with a frequency in the range of 15 Hz - 100 Hz, and/or with a frequency in the range of 15 kHz - 15 MHz.

4. Gas-insulated electric or electronic facility according to any of the preceding claims, wherein a first pick-up unit (9) is adapted for a low frequency range 15 Hz - 100 Hz, and a second pick-up unit (9) is adapted for a high frequency range 15 kHz - 15 MHz.

5. Gas-insulated electric or electronic facility according to any of the preceding claims, wherein the wireless link unit (10) transmits data with a frequency in the range of 2 - 3 GHz, preferably in the range of 2.3 - 2.6 GHz.

6. Gas-insulated electric or electronic facility according to any of the preceding claims, wherein only differential gas density sensor data are transmitted via the wireless link unit (10) to the monitoring device (2), wherein data transmission preferably takes place only, if a deviation in the gas density exceeding a threshold value is evaluated by the control element (8).

7. Gas-insulated electric or electronic facility according to any of the preceding claims, wherein for power backup the sensor comprises a power storage element (24) selected from the group of battery and capacity, preferably a gold capacitor.

8. Gas-insulated electric or electronic facility according to any of the preceding claims, wherein the pick-up unit (9) and the wireless link unit (10) use the same antenna.

9. Gas-insulated electric or electronic facility according to any of the preceding claims, wherein the wireless link unit (10) comprises a directional antenna, which preferably is such that, upon installation of the device, it can be directed to the monitoring device (2).

10. Gas-insulated electric or electronic facility, according to any of the preceding claims, comprising a gas-insulated panel with a group of gas-insulated electrical switchgears or a gas-insulated substation with a number of such groups and/or bays, each bay comprising several panels, wherein the group of switchgears or the substation comprises at least one device (1).

11. Gas-insulated electric or electronic facility, comprising a gas-insulated transformer, a gas-insulated panel with a group of electric transformers, or a gas-insulated substation with a number of such groups and/or bays, wherein the transformer, group of transformers or the substation, respectively, are equipped with at least one device (1) for the measurement of the density of an isolating gas in a space (3) of the facility, wherein the device (1) comprises at least one piezoelectric resonator (5) located in a chamber (12) in direct or indirect connection with said space (3) and comprising essentially the same density of said gas, wherein the device (1) comprises at least one piezoelectric reference resonator (4) located in a reference chamber (11) which is isolated as concerns said gas from said space (3) and said chamber (12), and wherein the device comprises actuating elements (6, 7) and at least one control element (8) for the determination of the difference in resonance frequency between the two resonators (4, 5), **characterized in that** the device (1) furthermore comprises at least one wireless link unit (10) connected to the control element (8) for wireless communication with a monitoring device (2) as well as at least one pick-up unit (9) for powering of the device (1),
the pick-up unit (9) provides the necessary energy for operating the actuating elements (6, 7), the control element (8) and the wireless link unit (10),
the pick-up unit (9) comprises a pick-up electrode or pick-up coil, and
a sensitivity and/or resonance frequency of the pick-up electrode or pick-up coil is adapted to electrical and/or magnetical fields present due to surrounding grid lines in order to power the device (1) directly by said electrical and/or magnetical fields.

12. Gas-insulated electric or electronic facility according to any one of the claims 10 and 11, it being a gas-insulated substation, wherein each panel or group is equipped with the at least one device (1).

13. Use of the gas-insulated electric or electronic facility comprising the primary switchgear and the device (1) according to any of the claims 1-9 **characterised by** using the device (1) for the measurement of the gas density in an SF₆-filled gas-insulation space (3) of the gas-insulated facility, wherein the device (1) is located at a position where electrical and/or magnetical fields generated by a grid voltage and/or by currents in the primary switchgear of the facility are strong enough to couple a sufficient amount of operational energy into the sensor via the pick-up unit (9).

14. Use according to claim 13, the gas insulated electric of electronic facility comprising a gas insulated substation with a number bays, each of the bays comprising gas insulated panels with a group of electric switchgears, wherein within one bay a multitude of devices (1) is located in various places, and wherein one single monitoring device (2) collects the data provided by these devices (1) and controls these devices (1).

15. Use according to any of claims 13 and 14, wherein the device (1), optionally after initial or intermittent complete data transfer, only transfers information about changes of the gas density.

16. Use according to claim 15, wherein this transfer can be continuous, intermittent, or preferably only at such moments in time when a change in gas density exceeding a predefined threshold value is detected in at least one of the devices (1).

## Patentansprüche

1. Gasisolierte, elektrische oder elektronische Einrichtung, die eine primäre Schaltanlage und eine Vorrichtung (1) zur Messung der Dichte eines isolierenden Gases in einem Raum (3) der Einrichtung umfasst, wobei die Vorrichtung (1) mindestens einen piezoelektrischen Resonator (5) umfasst, der in einer Kammer (12) in direkter oder indirekter Verbindung mit dem Raum (3) angeordnet ist und im Wesentlichen dieselbe Gasdichte hat, wobei die Vorrichtung (1) mindestens einen piezoelektrischen Referenzresonator (4) umfasst, der in einer Referenzkammer (11) angeordnet ist, die bezüglich des Gases von dem Raum (3) und von der Kammer (12) isoliert ist, und wobei die Vorrichtung Betätigungselemente (6, 7) und mindestens ein Steuerelement (8) zur Bestimmung der Differenz der Resonanzfrequenz zwischen den zwei Resonatoren (4, 5) umfasst, **dadurch gekennzeichnet, dass**
die Vorrichtung (1) ferner sowohl mindestens eine drahtlose Verbindungseinheit (10), die zur drahtlosen Kommunikation mit einer Überwachungsvorrichtung (2) mit dem Steuerelement (8) verbunden ist, als auch mindestens eine Abnehmereinheit (9) zum Antreiben der Vorrichtung (1) umfasst,
die Abnehmereinheit (9) die notwendige Energie zum Betreiben der Betätigungselemente (6, 7), des Steuerelements (8) und der drahtlosen Verbindungseinheit (10) bereitstellt,
die Abnehmereinheit (9) eine Abnehmerelektrode oder eine Abnehmerspule umfasst, und
eine Empfindlichkeit und/oder eine Resonanzfrequenz der Abnehmerelektrode oder der Abnehmerspule an die elektrischen und/oder magnetischen Felder angepasst sind, die jeweils durch eine Netzspannung und/oder durch Ströme in der primärem Schaltanlage der Einrichtung erzeugt werden, um die Vorrichtung (1) direkt durch die elektrischen und/oder magnetischen Felder anzutreiben.

2. Gasisolierte, elektrische oder elektronische Einrichtung nach Anspruch 1, wobei die Abnehmerelektrode oder die Abnehmerspule in einem Schwingkreis mit einer Kapazität verbunden sind.

3. Gasisolierte, elektrische oder elektronische Einrichtung nach einem der vorhergehenden Ansprüche, wobei die Empfindlichkeit und/oder die Resonanzfrequenz der Abnehmerelektrode oder der Abnehmerspule an elektrische und/oder magnetische Felder mit einer Frequenz im Bereich von 15 Hz-100 Hz und/oder mit einer Frequenz im Bereich von 15 kHz-15 MHz angepasst sind.

4. Gasisolierte, elektrische oder elektronische Einrichtung nach einem der vorhergehenden Ansprüche, wobei eine erste Abnehmereinheit (9) für einen Niederfrequenzbereich von 15 Hz-100 Hz angepasst ist und eine zweite Abnehmereinheit (9) für einen Hochfrequenzbereich von 15 kHz-15 MHz angepasst ist.

5. Gasisolierte, elektrische oder elektronische Einrichtung nach einem der vorhergehenden Ansprüche, wobei die drahtlose Übertragungseinheit (10) Daten mit einer Frequenz im Bereich von 2-3 GHz, vorzugsweise im Bereich von 2,3-2,6 GHz überträgt.

6. Gasisolierte, elektrische oder elektronische Einrichtung nach einem der vorhergehenden Ansprüche, wobei lediglich Daten des Gasdichtedifferentialsensors über die drahtlose Verbindungseinheit (10) an die Überwachungseinheit (2) übertragen werden, wobei die Datenübertragung vorzugsweise nur dann stattfindet, wenn durch das Steuerelement (8) eine Abweichung in der Gasdichte ausgewertet wird, die einen Schwellenwert übersteigt.

7. Gasisolierte, elektrische oder elektronische Einrichtung nach einem der vorhergehenden Ansprüche, wobei der Sensor zur Leistungsabsicherung ein Energiespeicherelement (24) umfasst, das aus der Gruppe aus einer Batterie und einer Kapazität, vorzugsweise einem Goldkondensator, ausgewählt ist.

8. Gasisolierte, elektrische oder elektronische Einrichtung nach einem der vorhergehenden Ansprüche, wobei die Abnehmereinheit (9) und die drahtlose Verbindungseinheit (10) dieselbe Antenne verwenden.

9. Gasisolierte, elektrische oder elektronische Einrichtung nach einem der vorhergehenden Ansprüche, wobei die drahtlose Verbindungseinheit (10) eine Richtantenne umfasst, die vorzugsweise derart ausgelegt ist, dass sie nach der Installation der Vorrichtung auf die Überwachungsvorrichtung (2) ausgerichtet werden kann.

10. Gasisolierte, elektrische oder elektronische Einrichtung nach einem der vorhergehenden Ansprüche, die ein gasisoliertes Panel mit einer Gruppe gasisolierter, elektrischer Schaltanlagen oder eine gasisolierte Unterstation mit einer Anzahl derartiger Gruppen und/oder Bays umfasst, wobei jede Bay mehrere Panels umfasst, wobei die Gruppe der Schaltanlagen oder die Unterstation mindestens eine Vorrichtung (1) umfassen.

11. Gasisolierte, elektrische oder elektronische Einrichtung, die einen gasisolierten Transformator, ein gasisoliertes Panel mit einer Gruppe elektrischer Transformatoren oder eine gasisolierte Unterstation mit einer Anzahl derartiger Gruppen und/oder Bays umfasst, wobei der Transformator, die Gruppe der Transformatoren oder die Unterstation jeweils mit mindestens einer Vorrichtung (1) zur Messung der Dichte eines isolierenden Gases in einem Raum (3) der Einrichtung ausgestattet sind, wobei die Vorrichtung (1) mindestens einen piezoelektrischen Resonator (5) umfasst, der in einer Kammer (12) in direkter oder indirekter Verbindung mit dem Raum (3) angeordnet ist und im Wesentlichen dieselbe Gasdichte hat, wobei die Vorrichtung (1) mindestens einen piezoelektrischen Referenzresonator (4) umfasst, der in einer Referenzkammer (11) angeordnet ist, die bezüglich des Gases von dem Raum (3) und von der Kammer (12) isoliert ist, und wobei die Vorrichtung Betätigungselemente (6, 7) und mindestens ein Steuerelement (8) zur Bestimmung der Differenz der Resonanzfrequenz zwischen den zwei Resonatoren (4, 5) umfasst, **dadurch gekennzeichnet, dass**
die Vorrichtung (1) ferner sowohl mindestens eine drahtlose Verbindungseinheit (10), die zur drahtlosen Kommunikation mit einer Überwachungsvorrichtung (2) mit dem Steuerelement (8) verbunden ist, als auch mindestens eine Abnehmereinheit (9) zum Antreiben der Vorrichtung (1) umfasst,
die Abnehmereinheit (9) die notwendige Energie zum Betreiben der Betätigungselemente (6, 7), des Steuerelements (8) und der drahtlosen Verbindungseinheit (10) bereitstellt,
die Abnehmereinheit (9) eine Abnehmerelektrode oder eine Abnehmerspule umfasst, und
eine Empfindlichkeit und/oder eine Resonanzfrequenz der Abnehmerelektrode oder der Abnehmerspule an die elektrischen und/oder magnetischen Felder angepasst sind, die aufgrund der umgebenden Netzleitungen vorhanden sind, um die Vorrichtung (1) direkt durch die elektrischen und/oder magnetischen Felder anzutreiben.

12. Gasisolierte, elektrische oder elektronische Einrichtung nach einem der Ansprüche 10 und 11, wobei sie eine gasisolierte Unterstation ist, wobei jedes Panel oder jede Gruppe mit der mindestens einen Vorrichtung (1) ausgestattet ist.

13. Verwendung der gasisolierten, elektrischen oder elektronischen Einrichtung, die die primäre Schaltanlage und die Vorrichtung (1) nach einem der Ansprüche 1-9 umfasst, **gekennzeichnet durch** das Verwenden der Vorrichtung (1) zur Messung der Gasdichte in einem mit SF₆ gefüllten Gasisolationsraum (3) der gasisolierten Einrichtung, wobei die Vorrichtung (1) an einer Position angeordnet ist, in der die elektrischen und/oder magnetischen Felder, die **durch** eine Netzspannung und/oder **durch** Ströme in der primären Schaltanlage der Einrichtung erzeugt werden, stark genug sind, um über die Abnehmereinheit (9) eine ausreichende Menge von Betriebsenergie in den Sensor einzukoppeln.

14. Verwendung nach Anspruch 13, wobei die gasisolierte, elektrische oder elektronische Einrichtung eine gasisolierte Unterstation mit einer Anzahl von Bays umfasst, wobei jeder der Bays gasisolierte Panels mit einer Gruppe elektrischer Schaltanlagen umfasst, wobei in einer Bay mehrere Vorrichtungen (1) an diversen Orten angeordnet sind und wobei eine einzelne Überwachungsvorrichtung (2) die Daten sammelt, die von diesen Vorrichtungen (1) bereitgestellt werden, und diese Vorrichtungen (1) steuert.

15. Verwendung nach einem der Ansprüche 13 und 14, wobei die Vorrichtung (1), optional auf eine anfängliche oder intermittierende vollständige Datenübertragung folgend, lediglich Informationen über Änderungen der Gasdichte überträgt.

16. Verwendung nach Anspruch 15, wobei diese Übertragung kontinuierlich, intermittierend oder vorzugsweise lediglich zu derartigen Zeitpunkten, zu denen in mindestens einer der Vorrichtungen (1) eine Änderung der Gasdichte detektiert wird, die einen vorgegebenen Schwellenwert übersteigt, stattfinden kann.

## Revendications

1. Installation électrique ou électronique à isolement gazeux comportant un appareillage principal de connexion et un dispositif (1) pour la mesure de la densité d'un gaz isolant dans un espace (3) de l'installation, le dispositif (1) comportant au moins un résonateur piézoélectrique (5) situé dans une chambre (12) en liaison directe ou indirecte avec ledit espace (3) et comportant essentiellement la même densité dudit gaz, le dispositif (1) comportant au moins un résonateur piézoélectrique (4) de référence situé dans une chambre (11) de référence qui est isolée, en ce qui concerne ledit gaz, dudit espace (3) et de ladite chambre (12), et le dispositif comportant des éléments (6, 7) d'actionnement et au moins un élément (8) de commande pour la détermination de la différence de fréquence de résonance entre les deux résonateurs (4, 5), **caractérisé en ce que**
le dispositif (1) comporte en outre au moins une unité (10) de liaison sans fil reliée à l'élément (8) de commande en vue d'une communication sans fil avec un dispositif (2) de surveillance ainsi qu'au moins un unité (9) de captage servant à l'alimentation du dispositif (1),
l'unité (9) de captage fournissant l'énergie nécessaire pour faire fonctionner les éléments (6, 7) d'actionnement, l'élément (8) de commande et l'unité (10) de liaison sans fil,
l'unité (9) de captage comportant une électrode de captage ou une bobine de captage, et
une sensibilité et/ou une fréquence de résonance de l'électrode de captage ou de la bobine de captage étant adaptées à des champs électriques et/ou magnétiques générés par une tension de réseau et/ou par des courants, respectivement, dans l'appareillage principal de connexion de l'installation afin d'alimenter directement le dispositif (1) par lesdits champs électriques et/ou magnétiques.

2. Installation électrique ou électronique à isolement gazeux selon la revendication 1, l'électrode de captage ou la bobine de captage étant reliée dans un circuit résonant à une capacité.

3. Installation électrique ou électronique à isolement gazeux selon l'une quelconque des revendications précédentes, la sensibilité et/ou la fréquence de résonance de l'électrode de captage ou de la bobine de captage étant adaptées à des champs électriques et/ou magnétiques d'une fréquence comprise dans la plage de 15 Hz à 100 Hz, et/ou d'une fréquence comprise dans la plage de 15 kHz à 15 MHz.

4. Installation électrique ou électronique à isolement gazeux selon l'une quelconque des revendications précédentes, une première unité (9) de captage étant adaptée à une plage de basses fréquences de 15 Hz à 100 Hz, et une deuxième unité (9) de captage étant adaptée à une plage de hautes fréquences de 15 kHz à 15 MHz.

5. Installation électrique ou électronique à isolement gazeux selon l'une quelconque des revendications précédentes, l'unité (10) de liaison sans fil émettant des données avec une fréquence comprise dans la plage de 2 à 3 GHz, de préférence dans la plage de 2,3 à 2,6 GHz.

6. Installation électrique ou électronique à isolement gazeux selon l'une quelconque des revendications précédentes, seules des données de capteur différentiel de densité de gaz étant envoyées via l'unité (10) de liaison sans fil au dispositif (2) de surveillance, l'émission de données n'ayant lieu de préférence que si un écart dans la densité de gaz dépassant une valeur seuil est évalué par l'élément (8) de commande.

7. Installation électrique ou électronique à isolement gazeux selon l'une quelconque des revendications précédentes, le capteur comportant, pour l'alimentation de secours, un élément (24) de stockage d'énergie choisi dans le groupe constitué d'une batterie et d'une capacité, de préférence un condensateur aurifère.

8. Installation électrique ou électronique à isolement gazeux selon l'une quelconque des revendications précédentes, l'unité (9) de captage et l'unité (10) de liaison sans fil utilisant la même antenne.

9. Installation électrique ou électronique à isolement gazeux selon l'une quelconque des revendications précédentes, l'unité (10) de liaison sans fil comportant une antenne directionnelle, qui est de préférence telle que, suite à l'installation du dispositif, elle peut être dirigée vers le dispositif (2) de surveillance.

10. Installation électrique ou électronique à isolement gazeux selon l'une quelconque des revendications précédentes, comportant un tableau à isolement gazeux muni d'un groupe d'appareillages de connexion électrique à isolement gazeux ou une sous-station à isolement gazeux munie d'une multiplicité de tels groupes et/ou de baies, chaque baie comportant plusieurs tableaux, le groupe d'appareillages de connexion ou la sous-station comportant au moins un dispositif (1).

11. Installation électrique ou électronique à isolement gazeux, comportant un transformateur à isolement gazeux, un tableau à isolement gazeux muni d'un groupe de transformateurs électriques, ou une sous-station à isolement gazeux munie d'une multiplicité de tels groupes et/ou de baies, le transformateur, le groupe de transformateurs ou la sous-station, respectivement, étant équipés d'au moins un dispositif (1) pour la mesure de la densité d'un gaz isolant dans un espace (3) de l'installation, le dispositif (1) comportant au moins un résonateur piézoélectrique (5) situé dans une chambre (12) en liaison directe ou indirecte avec ledit espace (3) et comportant essentiellement la même densité dudit gaz, le dispositif (1) comportant au moins un résonateur piézoélectrique (4) de référence situé dans une chambre (11) de référence qui est isolée, en ce qui concerne ledit gaz, dudit espace (3) et de ladite chambre (12), et le dispositif comportant des éléments (6, 7) d'actionnement et au moins un élément (8) de commande pour la détermination de la différence de fréquence de résonance entre les deux résonateurs (4, 5), **caractérisé en ce que**
le dispositif (1) comporte en outre au moins une unité (10) de liaison sans fil reliée à l'élément (8) de commande en vue d'une communication sans fil avec un dispositif (2) de surveillance ainsi qu'au moins un unité (9) de captage servant à l'alimentation du dispositif (1),
l'unité (9) de captage fournissant l'énergie nécessaire pour faire fonctionner les éléments (6, 7) d'actionnement, l'élément (8) de commande et l'unité (10) de liaison sans fil,
l'unité (9) de captage comportant une électrode de captage ou une bobine de captage, et
une sensibilité et/ou une fréquence de résonance de l'électrode de captage ou de la bobine de captage étant adaptées à des champs électriques et/ou magnétiques présents du fait de lignes de réseau environnantes afin d'alimenter directement le dispositif (1) par lesdits champs électriques et/ou magnétiques.

12. Installation électrique ou électronique à isolement gazeux selon l'une quelconque des revendications 10 et 11, celle-ci étant une sous-station à isolement gazeux, chaque tableau ou groupe étant équipé du ou des dispositifs (1).

13. Utilisation de l'installation électrique ou électronique à isolement gazeux comportant l'appareillage principal de connexion et le dispositif (1) selon l'une quelconque des revendications 1 à 9 **caractérisé par** l'utilisation du dispositif (1) pour la mesure de la densité de gaz dans un espace (3) d'isolement gazeux rempli de SF₆ de l'installation à isolement gazeux, le dispositif (1) étant situé dans une position où des champs électriques et/ou magnétiques générés par une tension de réseau et/ou par des courants dans l'appareillage principal de connexion de l'installation sont assez forts pour introduire par couplage une quantité suffisante d'énergie opérationnelle dans le capteur via l'unité (9) de captage.

14. Utilisation selon la revendication 13, l'installation électrique ou électronique à isolement gazeux comportant une sous-station à isolement gazeux munie d'une multiplicité de baies, chacune des baies comportant des tableaux à isolement gazeux munis d'un groupe d'appareillages de connexion électrique, **caractérisés en ce qu'**à l'intérieur d'une baie, une multitude de dispositifs (1) est située à divers endroits, et **en ce qu'**un seul dispositif (2) de surveillance recueille les données fournies par ces dispositifs (1) et commande ces dispositifs (1).

15. Utilisation selon l'une quelconque des revendications 13 et 14, le dispositif (1), éventuellement après un transfert initial ou intermittent de données complètes, ne transférant que des informations concernant des changements de la densité de gaz.

16. Utilisation selon la revendication 15, ce transfert pouvant être continu, intermittent ou, de préférence, n'avoir lieu qu'aux instants où un changement de la densité de gaz dépassant une valeur seuil prédéfinie est détecté dans au moins un des dispositifs (1).
